# EUROPÄISCHE PATENTSCHRIFT

(11) **EP 1 230 790 B1**
(45) Veröffentlichungstag und Bekanntmachung des Hinweises auf die Patenterteilung: **16.07.2003**
(21) Anmeldenummer: 00979558.4
(22) Anmeldetag: 14.11.2000
(51) Int. Cl.: H04N 3/27, H04N 3/20

(54) **SCHALTUNGSANORDNUNG ZUM STEUERN DER SPEISESPANNUNG EINER BILDSIGNAL-ABLENKUNGSEINHEIT**
CIRCUIT ARRANGEMENT FOR CONTROLLING THE SUPPLY VOLTAGE OF A VIDEO SIGNAL DEFLECTION UNIT
CIRCUIT POUR COMMANDER LA TENSION D'ALIMENTATION D'UNE UNITE DE DEVIATION DE SIGNAL D'IMAGE

(30) Priorität: 19.11.1999 DE 19955777
(43) Veröffentlichungstag der Anmeldung: 14.08.2002
(73) Patentinhaber: Micronas Munich GmbH, 81541 München (DE)
(72) Erfinder: JESCHKE, Alfred, 80807 München (DE)
(74) Vertreter: Bickel, Michael
(86) Internationale Anmeldenummer: EP0011257
(87) Internationale Veröffentlichungsnummer: WO01037545

(56) Entgegenhaltungen:
- US-A- 4 673 984
- US-A- 5 754 015

## Beschreibung

Schaltungsanordnung zum Steuern der Speisespannung einer Bildsignal-Ablenkungseinheit

Die vorliegende Erfindung betrifft eine Schaltungsanordnung zum Steuern der Speisespannung einer Bildsignal-Ablenkungseinheit, insbesondere der Horizontal-Endstufe von Monitoren oder Fernsehgeräten, die mit unterschiedlichen Horizontal-Frequenzen betrieben werden können, nach dem Oberbegriff des Anspruches 1.

Bei Multisync-Monitoren oder Fernsehgeräten, welche Bildquellen mit unterschiedlichen Horizontal-Frequenzen wiedergeben können, muß zur Konstanthaltung der Hochspannung und des Horizontal-Ablenkstroms und damit der Bildgröße die Speisespannung der zur Horizontal-Ablenkung dienenden Horizontal-Endstufe näherungsweise proportional zu der Horizontal-Frequenz der darzustellenden Bildquelle sein.

Wird die (nachfolgend der Einfachheit halber als H-Frequenz bezeichnete) Horizontal-Frequenz erhöht, muß demzufolge die Speisespannung der (nachfolgend der Einfachheit halber als H-Endstufe bezeichneten) Horizontal-Endstufe erhöht werden. Wird die H-Frequenz hingegen abgesenkt, muß die Speisespannung der H-Endstufe rechtzeitig erniedrigt werden, um einen Betrieb der H-Endstufe mit einer im Verhältnis zu der steuernden H-Frequenz zu hohen Speisespannung zu vermeiden, was ansonsten eine Zerstörung des H-Endstufentransistors zur Folge haben könnte.

Da zur Erzeugung der variablen Speisespannung Speicherelemente, wie z.B. Drosseln oder Kondensatoren, erforderlich sind, können beim Absenken der Speisespannung Probleme auftreten, wenn diese nicht schnell genug der Erniedrigung der H-Frequenz folgen kann. In diesem Fall tritt temporär eine zu hohe Spannung am H-Endstufentransistor auf, so daß die Gefahr einer Zerstörung des H-Endstufentransistors gegeben ist.

Es muß daher sichergestellt werden, daß die H-Endstufe zu keiner Zeit mit einer gegenüber der H-Frequenz zu hohen Speisespannung betrieben wird.

Hinsichtlich bekannter Schaltungsanordnungen nach dem Oberbegriff des Anspruches 1, wie sie beispielsweise in IEEE Transactions on Consumer Electronics, Vol. 44, Nr. 3, August 1998, Seite 718, beschrieben sind, wurde vorgeschlagen, die H-Frequenz lediglich mit einer festen Geschwindigkeit abzusenken, wobei diese Geschwindigkeit bei heutigen Systemen so langsam bemessen ist, daß ihr die Speisespannung der H-Endstufe in jedem Fall problemlos folgen kann. Die variable Speisespannung wird dabei von einer Spannung gesteuert, die proportional zu der die H-Endstufe steuernden Frequenz ist.

Der vorliegenden Erfindung liegt die Aufgabe zugrunde, eine Schaltungsanordnung zum Steuern der Speisespannung einer Bildsignal-Ablenkungseinheit, insbesondere einer H-Endstufe, vorzuschlagen, die auch bei einer schnellen Veränderung, insbesondere einer schnellen Absenkung, der der Bildsignal-Ablenkungseinheit zugeführten Frequenz eine sichere und schnellstmögliche Anpassung der Speisespannung ermöglicht.

Diese Aufgabe wird erfindungsgemäß durch eine Schaltungsanordnung mit den Merkmalen des Anspruches 1 gelöst. Die Unteransprüche definieren vorteilhafte und bevorzugte Ausführungsbeispiele der vorliegenden Erfindung.

Erfindungsgemäß wird bei der Steuerung der Speisespannung sowohl der augenblickliche Wert der Eingangsfrequenz als auch der augenblickliche Wert der Speisespannung berücksichtigt. Davon abhängig wird einerseits ein Steuersignal zur Einstellung der Speisespannung und andererseits ein Steuersignal zur Einstellung der Betriebsfrequenz der Bildsignal-Ablenkungseinheit, die abhängig von der Eingangsfrequenz an die Bildsignal-Ablenkungseinheit angelegt wird, erzeugt. Bei diesem zweiten Steuersignal kann es sich insbesondere um ein Steuersignal zur Einstellung der Nominalfrequenz einer in Form eines Phasenregelkreises ausgestalteten Frequenzregelschaltung handeln.

Auf diese Weise wird ein absolut sicheres Umschalten der Speisespannung bei Erniedrigung der Eingangsfrequenz gewährleistet, da sichergestellt werden kann, daß die Eingangsfrequenz nur so weit reduziert wird, wie es der augenblickliche Wert der Speisespannung erlaubt. Die der Bildsignal-Ablenkungseinheit zugeführte und aus der Eingangsfrequenz abgeleitete Betriebsfrequenz kann somit adaptiv, d.h. an die tatsächliche Verringerung der Speisespannung angepaßt, reduziert werden. Mit dieser adaptiven Änderung ist eine sichere und zudem schnellstmögliche Reduzierung der Speisespannung möglich. Treten während der Reduzierung der variablen Speisespannung Funktionsstörungen auf, kann durch Überwachung der Speisespannung ein zu starkes Absenken der Eingangsfrequenz verhindert werden.

Die vorliegende Erfindung eignet sich somit hervorragend zum Steuern der Speisespannung einer Horizontal-Ablenkungseinheit, welcher eine variable Horizontal-Frequenz einer entsprechenden Bildquelle zugeführt wird. Die Erfindung kann jedoch allgemein überall dort eingesetzt werden, wo einer Ablenkungseinheit eine variable Betriebsfrequenz zugeführt wird und die Ablenkungseinheit mit einer an die variable Betriebsfrequenz angepaßten Speisespannung zu betreiben ist.

Die Erfindung wird nachfolgend unter Bezugnahme auf die beigefügte Zeichnung anhand eines bevorzugten Ausführungsbeispiels näher erläutert.
Fig. 1 zeigt ein vereinfachtes Blockschaltbild einer erfindungsgemäßen Schaltungsanordnung, und
Fig. 2 zeigt eine mögliche digitale Realisierung einer in Fig. 1 gezeigten Frequenzmeßeinheit und Steuereinheit.

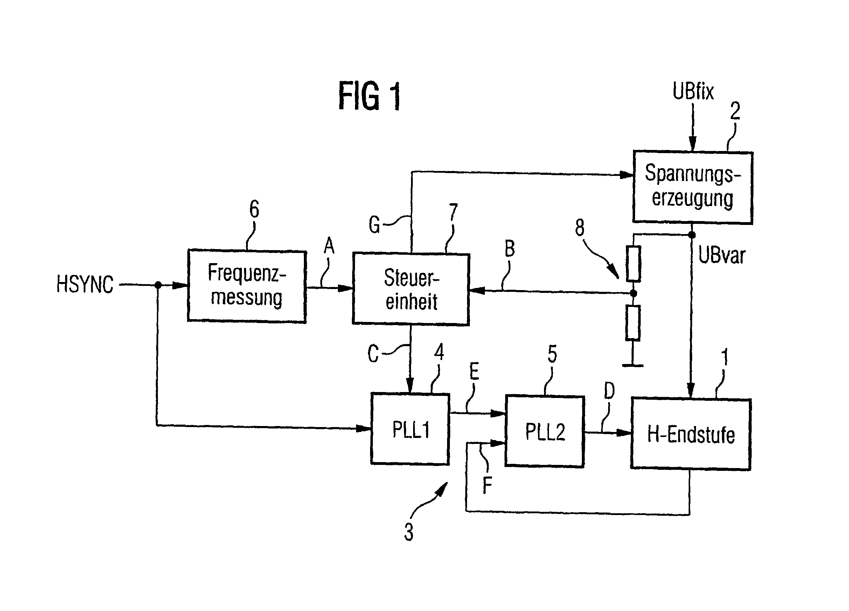

Die in Fig. 1 gezeigte Schaltungsanordnung dient zum Steuern einer variablen Speisespannung UBvar, die der zur horizontalen Ablenkung des Bildstrahls beispielsweise in einem Multisync-Monitor oder Fernsehgerät dienenden Horizontal-Endstufe (H-Endstufe) 1 zugeführt wird. Der Schaltungsanordnung wird eine Horizontal-Frequenz (H-Frequenz) HSYNC einer darzustellenden Bildquelle zugeführt, mit der die H-Endstufe 1 zu betreiben ist.

Zu diesem Zweck wird die Betriebsfrequenz der H-Endstufe 1 mit Hilfe eine Regelschaltung 3 aus der H-Frequenz HSYNC abgeleitet. Das pulsförmige Eingangssignal HSYNC, dessen positive Flanke jeweils einen Zeilenbeginn kennzeichnet, wird einem über ein Steuersignal C angesteuerten ersten Phasenregelkreis ("Phase Locked Loop", PLL) 4 zugeführt, wobei das Ausgangssignal dieses ersten Phasenregelkreises 4 in Phase mit dem Eingangssignal HSYNC ist. Dem ersten Phasenregelkreis 4 folgt ein weiterer Phasenregelkreis 5, der als Eingangssignale die Ausgangsfrequenz E des Phasenregelkreises 4 und die augenblickliche Frequenz F der H-Endstufe 1 empfängt und zum Ausgleich der Verzögerung der H-Endstufe 1 dient. Im eingeschwungenen Zustand besitzen die Signale HSYNC, E, F und D die gleiche Frequenz.

Die der H-Endstufe 1 zugeführte variable Versorgungs- oder Speisespannung UBvar wird von einer über ein Steuersignal G angesteuerten Spannungserzeugungseinheit 2 aus einer festen Referenzspannung UBfix erzeugt.

Die Steuersignale C und G, über welche die Nominalfrequenz des Phasenregelkreises 4 bzw. die gewünschte Speisespannung UBvar vorgebbar sind, werden von einer Steuereinheit 7 in Abhängigkeit von einem Frequenzmeßsignal A und einem Spannungsmeßsignal B erzeugt. Das Frequenzmeßsignal A wird von einer Frequenzmeßeinheit 6 generiert und ist proportional zu der augenblicklichen Frequenz des Eingangssignals HSYNC. Das Spannungsmeßsignal B wird im vorliegenden Fall mit Hilfe eines Spannungsteilers 8 aus der variablen Speisespannung UBvar abgeleitet und repräsentiert somit den augenblicklichen Wert der der H-Endstufe 1 zugeführten Speisespannung.

Solange von der Steuereinheit 7 das Steuersignal C nicht verändert wird, kann sich die Frequenz des Phasenregelkreises 4 und damit die Frequenz des der H-Endstufe 1 zugeführten Signals D nur innerhalb des Haltebereichs des Phasenregelkreises 4 verändern. Bei einer Frequenzabsenkung des Eingangssignals HSYNC von beispielsweise 38kHz auf 31kHz kann sich die Frequenz des Signals D (unter der Annahme, daß der Haltebereich des Phasenregelkreises 4 1,5kHz umfaßt) maximal auf beispielsweise 36,5kHz verringern, solange von der Steuereinheit 7 keine neue Nominalfrequenz vorgegeben wird.

Erkennt die Steuereinheit 7 durch Auswertung des Frequenzmeßsignals A und des dem Phasenregelkreis 4 zugeführten Steuersignals C, welches repräsentativ für die augenblickliche Betriebsfrequenz D der H-Endstufe 1 ist, daß die Eingangsfrequenz HSYNC kleiner als die augenblickliche Betriebsfrequenz der H-Endstufe 1 ist und daher das Steuersignal C verändert werden muß, um die Synchronisation des Phasenregelkreises 4 auf die niedrigere Eingangsfrequenz HSYNC zu ermöglichen, wird die Spannungserzeugungseinheit 2 mit Hilfe des Steuersignals G angewiesen, die Speisespannung UBvar abzusenken. Sinkt nun die Speisespannng UBvar tatsächlich ab (was über das Spannungsmeßsignal B überwacht werden kann), reduziert die Steuereinheit 7 das Steuersignal C und damit die Nominalfrequenz des Phasenregelkreises 4 soweit, wie es der augenblickliche Wert der Speisespannung UBvar zuläßt. Erst wenn die Speisespannung UBvar den für den abgesenkten Frequenzwert der Eingangsfrequenz HSYNC erforderlichen Wert (d.h. bei dem obigen Beispiel den für den Eingangsfrequenzwert von 31kHz erforderlichen Wert) erreicht hat, wird von der Steuereinheit 7 auch das Steuersignal C auf den für den abgesenkten Frequenzwert der Eingangsfrequenz HSYNC erforderlichen Wert eingestellt. Auf diese Weise erfolgt bei einer Absenkung der Eingangsfrequenz HSYNC die Reduzierung des Steuersignals C und damit der Nominalfrequenz des Phasenregelkreises 4 und der der H-Endstufe 1 zugeführten Betriebsfrequenz des Signals D angepaßt an den tatsächlichen Rückgang der Speisespannung UBvar.

Die Steuereinheit 7 kann auch bei einer Erhöhung der Eingangsfrequenz HSYNC eine sichere Erhöhung der Speisespannung UBvar sicherstellen. In diesem Fall muß gewährleistet sein, daß die Speisespannung UBvar nicht schneller als die Frequenz am Ausgang des Phasenregelkreises 4 und damit nicht schneller als die Betriebsfrequenz D der H-Endstufe 1 ansteigt. Eine Erhöhung der Eingangsfrequenz HSYNC ist im Vergleich zu einer Frequenzabsenkung allerdings insofern unkritischer, als daß in diesem Fall die Spannungserhöhung der Speisespannung UBvar durch in der Spannungserzeugungseinheit 2 enthaltene Speicherelemente (Drosseln, Kondensatoren etc.) ohnehin verzögert wird. Da aber auch die Frequenz des Ausgangssignals E des Phasenregelkreises 4 nicht sprunghaft ansteigt, ist die Steuereinheit 7 derart ausgestaltet, daß sie für den Fall einer Erhöhung der Eingangsfrequenz HSYNC zunächst die Nominalfrequenz des Phasenregelkreises 4 über das Steuersignal C anhebt, um die der H-Endstufe 1 zugeführte Betriebsfrequenz D zu erhöhen. Erst wenn die Nominalfrequenz des Phasenregelkreises 4 den zu dem erhöhten Eingangsfrequenzwert passenden Wert erreicht hat, wird von der Steuereinheit 7 mit Hilfe des Steuersignals G die Spannungserzeugungseinheit 2 angewiesen, die Speisespannung UBvar auf einen dem erhöhten Eingangsfrequenzwert entsprechenden Spannungswert einzustellen. Eine Überwachung der Signale E bzw. D durch die Steuereinheit 7 dahingehend, ob sie tatsächlich den höheren Frequenzwert angenommen haben, ist nicht unbedingt erforderlich, da sich die in Fig. 1 gezeigten Phasenregelkreise 4 und 5 heutzutage üblicherweise in einer mit einer niedrigen Versorgungsspannung betriebenen integrierten Schaltung befinden und daher weniger fehleranfällig als die Spannungserzeugungseinheit 2 sind.

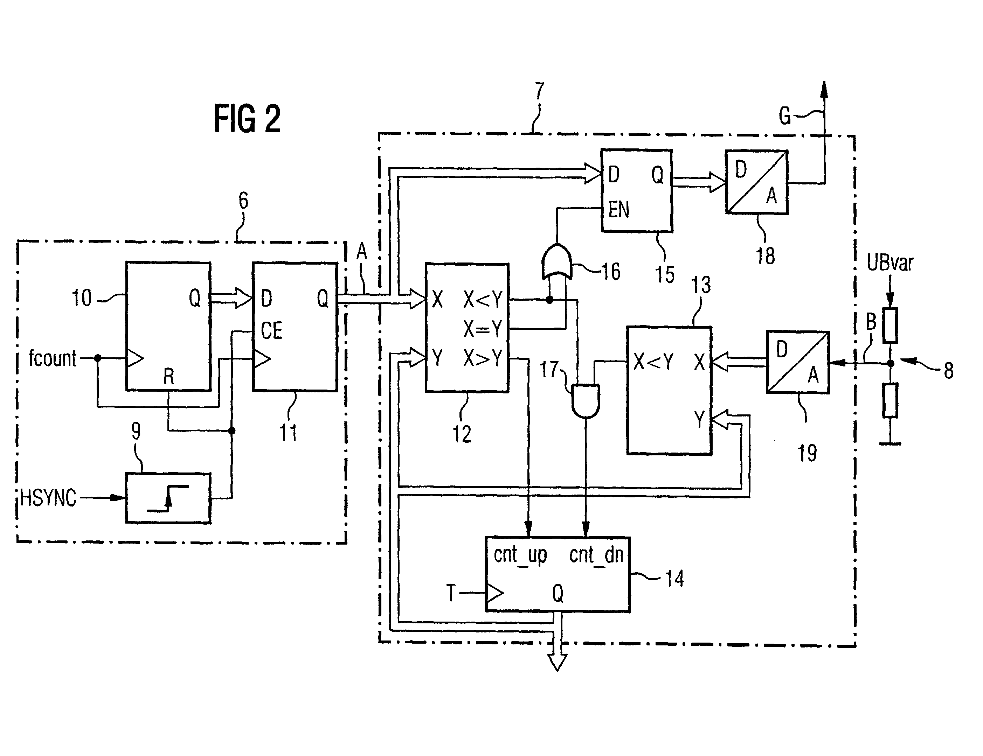

In Fig. 2 ist eine mögliche digitale Realisierung der in Fig. 1 gezeigten Frequenzmeßeinheit 6 sowie der Steuereinheit 7 dargestellt.

Die Frequenzmeßeinheit 6 umfaßt eine Einheit 9 zum Erkennen der positiven bzw. ansteigenden Flanke des Eingangsfrequenzsignals HSYNC, einen Zähler 10 und ein Register 11. Die Einheit 9 erzeugt mit jeder ansteigenden Flanke des Eingangsfrequenzsignals HSYNC einen entsprechenden Impuls. Der Zähler 10 empfängt an seinem Takteingang eine Zählfrequenz fcount, während am Rücksetz- oder Reset-Eingang R des Zählers 10 das pulsförmige Ausgangssignal der Einheit 9 anliegt. Das an einem Datenausgang Q des Zählers 10 anliegende Datenwort ist einem Dateneingang D des Registers 11 zugeführt. Das Register 11 wird mit derselben Taktfrequenz fcount wie der Zähler 11 betrieben. Zudem ist das pulsförmige Ausgangssignal der Einheit 9 an einen "Clock Enable"-Eingang CE des Registers 11 angelegt. Auf diese Weise tritt am Datenausgang Q des Registers 11 in Form des Frequenzmeßsignals A ein zu dem augenblicklichen Wert der Eingangsfrequenz HSYNC proportionaler Datenwert auf.

Die Steuereinheit 7 umfaßt zwei Komparatoren 12 und 13, einen Aufwärts-/Abwärts-Zähler 14, ein Latch-Flipflop 15, ein OR-Gatter 16, ein AND-Gatter 17, einen D/A-Wandler 18 und einen A/D-Wandler 19.

Der Komparator 12 vergleicht den über den Ausgang der Frequenzmeßeinheit 6 ausgegebenen Frequenzmeßwert A der Eingangsfrequenz HSYNC mit dem aktuellen Wert C des die Nominalfrequenz des Phasenregelkreises 4 einstellenden Steuersignals, welches über einen Datenausgang Q des Aufwärts-/Abwärts-Zählers 14 ausgegeben wird. Ist A < C, wird das Latch-Flipflop 15 über einen entsprechenden Steuerausgang des Komparators 12 und das OR-Gatter 16 aktiviert, so daß der an dem Dateneingang D des Latch-Flipflops 15 anliegende Frquenzmeßwert A an den Datenausgang Q des Latch-Flipflops 15 durchgeschaltet und über den D/A-Wandler 18 in Form des Steuersignals G der Spannungserzeugungseinheit 2 zugeführt wird, um die Speisespannung UBvar zu reduzieren.

Der Komparator 13 vergleicht den über den Spannungsteiler 8 gewonnenen und mit Hilfe des A/D-Wandlers 19 in ein digitales Datenwort umgesetzten Spannungsmeßwert B mit der aktuellen Nominalfrequenz C. Der Zähler 14, dessen Ausgang C die Nominalfrequenz des Phasenregelkreises 4 steuert, kann in dem zuvor beschriebenen Fall von A < C aufgrund des mit dem entsprechenden Abwärtszähleingang cnt dn des Zählers 14 verbundenen AND-Gatters 17 erst dann abwärts zählen, wenn der an dem einen Eingang des Komparators 13 anliegende Spannungsmeßwert B kleiner als C ist. D.h. das Steuersignal C kann nur erniedrigt werden, wenn sowohl A < C als auch B < C ist.

Im Falle einer Erhöhung der Eingangsfrequenz HSYNC wird der Zähler 14 über einen mit dem Aufwärtszähleingang cnt_up des Zählers 14 verbundenen Steuerausgang des Komparators 12 zum Hochzählen veranlaßt, so daß der Zähler bis C = A hochzählt. Erst bei C = A, d.h. wenn die Nominalfrequenz des Phasenregelkreises 4 gleich der Eingangsfrequenz HSYNC ist, wird das Latch-Flipflop 15 aktiviert, und das der Spannungserzeugungseinheit 2 zugeführte Steuersignal G nimmt den erhöhten Frequenzwert A an, so daß die Spannungserzeugungseinheit 2 die Speisespannung UBvar erhöht.

Die an den Zähler 14 der Steuereinheit 7 angelegte Taktfrequenz 1/T bestimmt die maximale Änderungsgeschwindigkeit des von dem Zähler 14 für den Phasenregelkreis 4 generierten Steuersignals C und damit auch die maximale Änderungsgeschwindigkeit des die H-Endstufe 1 steuernden Frequenzsignals D (vgl. Fig. 1). Die Taktfrequenz 1/T kann unterschiedlich abhängig von der Zählrichtung des Zählers 14 gewählt werden.

## Patentansprüche

1. Schaltungsanordnung zum Steuern der Speisespannung einer Bildsignal-Ablenkungseinheit,
mit einer Spannungserzeugungseinrichtung (2) zum Erzeugen der Speisespannung (UBvar) für die Bildsignal-Ablenkungseinheit (1),
mit einer Frequenzregelschaltung (3), welche eine Eingangsfrequenz (HSYNC) empfängt und davon abhängig eine Betriebsfrequenz (D) für die Bildsignal-Ablenkungseinheit (1) erzeugt, und
mit Steuermitteln (7) zum Steuern der Spannungserzeugungseinrichtung (2),
**dadurch gekennzeichnet,**
**daß** eine Frequenzmeßeinrichtung (6) zum Erzeugen eines dem augenblicklichen Frequenzwert der Eingangsfrequenz (HSYNC) entsprechenden Frequenzmeßsignals (A) vorgesehen ist,
**daß** eine Spannungsmeßeinrichtung (8) zum Erzeugen eines dem augenblicklichen Spannungswert der Speisespannung (UBvar) entsprechenden Spannungsmeßsignals (B) vorgesehen ist, und daß die Steuermittel (7) derart ausgestaltet sind, daß sie in Abhängigkeit von dem Frequenzmeßsignal (A) der Frequenzmeßeinrichtung (6) und dem Spannungsmeßsignal (B) der Spannungsmeßeinrichtung (8) ein erstes Steuersignal (G) zum Steuern der Spannungserzeugungseinrichtung (2) und ein zweites Steuersignal (C) zum Steuern der Frequenzregelschaltung (3) erzeugen.

2. Schaltungsanordnung nach Anspruch 1,
**dadurch gekennzeichnet,**
**daß** Steuermittel (7) und die Frequenzregelschaltung (3) derart ausgestaltet sind, daß über das zweite Steuersignal (C) die Nominalfrequenz der Frequenzregelschaltung (3) einstellbar ist.

3. Schaltungsanordnung nach Anspruch 1 oder 2,
**dadurch gekennzeichnet,**
**daß** die Steuermittel (7) derart ausgestaltet sind, daß sie bei Erkennen eines Absinkens der Eingangsfrequenz (HSYNC) durch Auswertung des Frequenzmeßsignals (A) die Spannungserzeugungseinrichtung (2) über das erste Steuersignal (G) anweisen, die Speisespannung (UBvar) für die Bildsignal-Ablenkungseinheit (1) zu reduzieren.

4. Schaltungsanordnung nach Anspruch 3,
**dadurch gekennzeichnet,**
**daß** die Steuermittel (7) derart ausgestaltet sind, daß sie, nachdem sie die Spannungserzeugungseinrichtung (2) über das erste Steuersignal (G) angewiesen haben, die Speisespannung (UBvar) zu reduzieren, bei Erkennen eines tatsächlichen Absinkens der Speisespannung (UBvar) durch Auswertung des Spannungsmeßsignals (B) das der Frequenzregelschaltung (3) zugeführte zweite Steuersignal (C) entsprechend dem durch das Spannungsmeßsignal (B) angezeigten augenblicklichen Spannungswert der Speisespannung (UBvar) erzeugen.

5. Schaltungsanordnung nach Anspruch 2 und Anspruch 4,
**dadurch gekennzeichnet,**
**daß** die Steuermittel (7) derart ausgestaltet sind, daß sie, nachdem sie die Spannungserzeugungseinrichtung (2) über das erste Steuersignal (G) angewiesen haben, die Speisespannung (UBvar) zu reduzieren, bei Erkennen eines tatsächlichen Absinkens der Speisespannung (UBvar) durch Auswertung des Spannungsmeßsignals (B) das der Frequenzregelschaltung (3) zugeführte zweite Steuersignal (C) derart einstellen, daß die Nominalfrequenz der Frequenzregelschaltung (3) entsprechend dem durch das Spannungsmeßsignal (B) angezeigten augenblicklichen Spannungswert der Speisespannung (UBvar) reduziert wird.

6. Schaltungsanordnung nach einem der vorhergehenden Ansprüche,
**dadurch gekennzeichnet,**
**daß** die Steuermittel (7) derart ausgestaltet sind, daß sie bei Erkennen eines Anstiegs der Eingangsfrequenz (HSYNC) durch Auswertung des Frequenzmeßsignals (A) die Frequenzregelschaltung (3) über das zweite Steuersignal (C) anweisen, die Betriebsfrequenz (D) für die Bildsignal-Ablenkungseinheit (1) zu erhöhen.

7. Schaltungsanordnunf nach Anspruch 6,
**dadurch gekennzeichnet,**
**daß** die Steuermittel (7) derart ausgestaltet sind, daß sie, nachdem sie die Frequenzregelschaltung (3) über das zweite Steuersignal (C) angewiesen haben, die Betriebsfrequenz (D) für die Bildsignal-Ablenkungseinheit (1) zu erhöhen, die Spannungserzeugungseinrichtung (2) über das erste Steuersignal (G) erst dann anweisen, die Speisespannung (UBvar) für die Bildsignal-Ablenkungseinheit (1) zu erhöhen, wenn die von der Frequenzregelschaltung (3) erzeugte Betriebsfrequenz (D) für die Bildsignal-Ablenkungseinheit (1) einen dem erhöhten Wert der Eingangsfrequenz (HSYNC) entsprechenden Wert erreicht hat.

8. Schaltungsanordnung nach einem der vorhergehenden Ansprüche,
**dadurch gekennzeichnet,**
**daß** die Frequenzmeßeinrichtung (6) digital derart ausgestaltet ist, daß sie den Steuermitteln (7) als das Frequenzmeßsignal (A) ein dem augenblicklichen Frequenzwert der Eingangsfrequenz (HSYNC) entsprechendes Datenwort zuführt.

9. Schaltungsanordnung nach Anspruch 8,
**dadurch gekennzeichnet,**
**daß** die Frequenzmeßeinrichtung (6) zur Erzeugung des dem augenblicklichen Frequenzwert der Eingangsfrequenz (HSYNC) entsprechenden Datenworts einen Zähler (10) umfaßt,
wobei der Zähler (10) einen Takteingang zum Empfangen eines Taktsignals (fcount), einen Rücksetzeingang (R) zum Empfangen der Eingangsfrequenz (HSYNC) und einen Datenausgang (Q) zum Ausgeben des Datenworts aufweist.

10. Schaltungsanordnung nach einem der vorhergehenden Ansprüche,
**dadurch gekennzeichnet,**
**daß** die Steuermittel (7) digital ausgestaltet sind und einen ersten Komparator (12), einen zweiten Komparator (13), einen Zähler (14) und ein Flipflop (15) umfassen,
wobei an einen Dateneingang (D) des Flipflops (15) das Frequenzmeßsignal (A) der Frequenzmeßeinrichtung (6) angelegt ist und an einem Datenausgang (Q) des Flipflops (15) ein dem ersten Steuersignal (G) entsprechendes Datenwort abgreifbar ist,
wobei der erste Komparator (12) den augenblicklichen Wert des Frequenzmeßsignals (A) mit dem augenblicklichen Zählerstand des Zählers (14) vergleicht und abhängig von diesem Vergleichsergebnis den Zähler (14) zum Erhöhen oder Verringern seines Zählerstands veranlaßt und ein Durchschalten des an dem Dateneingang (D) des Flipflop (15) anliegenden augenblicklichen Wert des Frequenzmeßsignals (A) an den Datenausgang (Q) des Flipflops (15) ermöglicht,
wobei der zweite Komparator (13) den augenblicklichen Wert des Spannungsmeßsignals (B) der Spannungsmeßeinrichtung (8) mit dem augenblicklichen Zählerstand des Zählers (14) vergleicht und abhängig von diesem Vergleichsergebnis den Zähler (14) zum Verringern seines Zählerstands veranlaßt, und
wobei der Zählerstand des Zählers (14) als ein dem zweiten Steuersignal (C) entsprechendes Datenwort abgreifbar ist.

11. Schaltungsanordnung nach Anspruch 10,
**dadurch gekennzeichnet,**
**daß** der erste Komparator (12) einen ersten Steuerausgang, einen zweiten Steuerausgang und einen dritten Steuerausgang umfaßt, wobei der erste Steuerausgang einem ersten Vergleichsergebnis zugeordnet ist, wonach der augenblicklichen Wert des Frequenzmeßsignals (A) kleiner als der augenblickliche Zählerstand des Zählers (14) ist, wobei der zweite Steuerausgang einem zweiten Vergleichsergebnis zugeordnet ist, wonach der augenblickliche Wert des Frequenzmeßsignals (A) dem augenblicklichen Zählerstand des Zählers (14) entspricht, und wobei der dritte Steuerausgang einem dritten Vergleichsergebnis zugeordnet ist, wonach der augenblickliche Wert des Frequenzmeßsignals (A) größer als der augenblickliche Zählerstand des Zählers (14) ist,
**daß** der zweite Komparator (13) einen Steuerausgang umfaßt, welcher einem Vergleichsergebnis zugeordnet ist, wonach der augenblickliche Wert des Spannungsmeßsignals (B) kleiner als der augenblickliche Zählerstand des Zählers (14) ist,
der erste und zweite Steuerausgang des ersten Komparators (12) über eine OR-Schaltung (16) mit einem Freigabeanschluß (EN) des Flipflops (15) verbunden sind, während der dritte Steuerausgang des ersten Komparators (12) mit einem ersten Steuereingang (cnt_up) des Zählers (14) verbunden ist, wobei der erste Steuereingang (cnt_up) des Zählers (14) einem Aufwärtszählbetrieb des Zählers (14) zugeordnet ist, und
**daß** der erste Steuerausgang des ersten Komparators (12) und der Steuerausgang des zweiten Komparators (13) über eine AND-Schaltung (17) mit einem zweiten Steuereingang (cnt_dn) des Zählers (14) verbunden ist, wobei der zweite Steuereingang (cnt_dn) des Zählers (14) einem Abwärtszählbetrieb des Zählers (14) zugeordnet ist.

12. Verwendung einer Schaltungsanordnung nach einem der vorhergehenden Ansprüche zum Steuern der Speisespannung der Horizontal-Ablenkungseinheit (1) eines Bilddarstellungssystems, insbesondere eines Monitors oder Fernsehgeräts,
wobei die Eingangsfrequenz (HSYNC) der Schaltungsanordnung die zum Betrieb der Horizontal-Ablenkungseinheit (1) vorgesehene Horizontal-Frequenz ist.

## Claims

1. Circuitry for controlling the feed voltage of a video signal deflection unit,
having a voltage generation device (2) for generating the feed voltage (UBvar) for the video signal deflection unit (1),
having a frequency regulation circuit (3), which receives an input frequency (HSYNC) and, as a function thereof, generates an operating frequency (D) for the video signal deflection unit (1), and
having control means (7) for controlling the voltage generation device (2),
**characterised in that** a frequency measuring device (6) is provided to generate a frequency measurement signal (A) corresponding to the momentary frequency value of the input frequency (HSYNC),
**in that** a voltage measuring device (8) is provided to generate a voltage measurement signal (B) corresponding to the momentary voltage value of the feed voltage (UBvar),
**and in that** the control means (7) are configured in such a manner that they generate a first control signal (G) for controlling the voltage generation device (2) and a second control signal (C) for controlling the frequency regulation circuit (3) as a function of the frequency measurement signal (A) of the frequency measuring device (6) and the voltage measurement signal (B) of the voltage measuring device (8).

2. Circuitry according to Claim 1,
**characterised in that** control means (7) and the frequency regulation circuit (3) are configured in such a manner that the nominal frequency of the frequency regulation circuit (3) can be set via the second control signal (C).

3. Circuitry according to Claim 1 or 2,
**characterised in that** the control means (7) are configured in such a manner that, upon detecting a drop in the input frequency (HYSNC) by evaluating the frequency measurement signal (A), they instruct the voltage generation device (2) via the first control signal (G) to reduce the feed voltage (UBvar) for the video signal deflection unit (1).

4. Circuitry according to Claim 3,
**characterised in that** the control means (7) are configured in such a manner that, after they have instructed the voltage generating device (2) via the first control signal (G) to reduce the feed voltage (UBvar), upon detecting an actual reduction in the feed voltage (UBvar) by evaluating the voltage measurement signal (B) they generate the second control signal (C) supplied to the frequency regulation circuit (3) corresponding to the momentary voltage value of the feed voltage (UBvar) indicated by the voltage measurement signal (B).

5. Circuitry according to Claim 2 and Claim 4,
**characterised in that** the control means (7) are configured in such a manner that, after they have instructed the voltage generating device (2) via the first control signal (G) to reduce the feed voltage (UBvar), upon detecting an actual reduction in the feed voltage (UBvar) by evaluating the voltage measurement signal (B) they set the second control signal (C) supplied to the frequency regulation circuit (3) in such a manner that the nominal frequency of the frequency regulation circuit (2) is reduced corresponding to the momentary voltage value of the feed voltage (UBvar) displayed by the voltage measurement signal (B).

6. Circuitry according to one of the preceding Claims,
**characterised in that** the control means (7) are configured in such a manner that, upon detecting an increase in the input frequency (HSYNC) by evaluating the frequency measurement signal (A), they instruct the frequency regulation circuit (3) via the second control signal (C) to increase the operating frequency (D) for the video signal deflection unit (1).

7. Circuitry according to Claim 6,
**characterised in that** the control means (7) are configured in such a manner that, after they have instructed the frequency regulation circuit (3) via the second control signal (C) to increase the operating frequency (D) for the video image deflection unit (1), they only instruct the voltage generating device (2) via the first control signal (G) to increase the feed voltage (UBvar) for the video signal deflection unit (1) when the operating frequency (D) for the video signal deflection unit (1) that is generated by the frequency regulation circuit (3) has reached a value corresponding to the increased value of the input frequency (HSYNC).

8. Circuitry according to one of the preceding claims,
**characterised in that** the frequency measuring device (6) is digitally configured in such a manner that it supplies a data word corresponding to the momentary frequency value of the input frequency (HSYNC) to control means (7) as the frequency measurement signal (A).

9. Circuitry according to Claim 8,
**characterised in that** the frequency measuring device (6) for generating the data word corresponding to the momentary frequency value of the input frequency (HSYNC) comprises a counter (10), wherein the counter (10) comprises a clock input for receiving a clock pulse signal (fcount), a reset input (R) for receiving the input frequency (HSYNC) and a data output (Q) for outputting the data word.

10. Circuitry according to one of the preceding Claims,
**characterised in that** the control means (7) are digitally configured and comprise a first comparator (12), a second comparator (13), a counter (14) and a flip-flop (15),
wherein the frequency measurement signal (A) of the frequency measuring device (6) is applied to a data input (D) of the flip-flop (15) and a data word corresponding to the first control signal (G) can be tapped at a data output (Q) of the flip-flop (15),
wherein the first comparator (12) compares the momentary value of the frequency measurement signal (A) with the momentary counter reading of the counter (14) and, as a function of this comparison result, causes the counter (14) to increase or lower its counter reading and enables a gating of the momentary value of the frequency measurement signal (A) lying at the data input (D) of the flip-flop (15) to the data output (Q) of the flip-flop (15),
wherein the second comparator (13) compares the momentary value of the voltage measurement signal (B) of the voltage measuring device (8) with the momentary counter reading of the counter (14) and as a function of this comparison result causes the counter (14) to lower its counter reading, and
wherein the counter reading of the counter (14) can be tapped as a data word corresponding to the second control signal (C).

11. Circuitry according to Claim 10,
**characterised in that** the first comparator (12) comprises a first control output, a second control output and a third control output, wherein the first control output is associated with a first comparison result, according to which the momentary value of the frequency measurement signal (A) is less than the momentary counter reading of the counter (14), wherein the second control output is associated with a second comparison result, according to which the momentary value of the frequency measurement signal (A) corresponds to the momentary counter reading of the counter (14), and
wherein the third control output is associated with a third comparison result, according to which the momentary value of the frequency measurement signal (A) is larger than the momentary counter reading of the counter (14),
**in that** the second comparator comprises a control output which is associated with a comparison result, according to which the momentary value of the voltage measurement signal (B) is less than the momentary counter reading of the counter (14), the first and second control output of the first comparator (12) are connected via an OR circuit (16) to an enable connection (EN) of the flip-flop (15), while the third control output of the first comparator (12) is connected to a first control input (cnt_up) of the counter (14), wherein the first control input (cnt_up) of the counter (14) is associated with an upward counting operation of the counter (14),
**and in that** the first control output of the first comparator (12) and the control output of the second comparator (13) is connected via an AND circuit (17) to a second control input (cnt_dn) of the counter (14), with the second control input (cnt_dn) of the counter (14) being associated with a downward counting operation of the counter (14).

12. Use of circuitry according to one of the preceding Claims for controlling the feed voltage of the horizontal deflection unit (1) of a picture representation system, in particular of a monitor or a television set, whereby the input frequency (HSYNC) of the circuitry is the horizontal frequency provided to operate the horizontal deflection unit (1).

## Revendications

1. Circuit de commande de la tension d'alimentation d'une unité de déflection du signal d'image comprenant :
- un générateur de tension (2) générant la tension d'alimentation (UBvar) de l'unité de déflection de signal d'image (1).
- un régulateur de fréquence (3) qui reçoit une fréquence d'entrée (HSYNC) et génère à partir de là une fréquence de fonctionnement (D) pour l'unité de déflection du signal d'image (1) et
- les moyens de commande (7) pour commander le générateur de tension (2),
**caractérisé par**
une installation de mesure de fréquence (6) pour générer un signal de mesure de fréquence (A) correspondant à la valeur de fréquence instantanée de la fréquence d'entrée (HSYNC),
- une installation de mesure de tension (8) pour générer un signal de mesure de tension (B) correspondant à la valeur instantanée de la tension d'alimentation (Ubvar) et,
- les moyens de commande (7) sont réalisés pour qu'en fonction du signal de mesure de fréquence (A) de l'installation de mesure de fréquence (6) et du signal de mesure de tension (B) de l'installation de mesure de tension (8), il génère un premier signal de commande (G) pour commander le générateur de tension (2) et un second signal de commande (C) pour commander le régulateur de fréquence (3).

2. Circuit selon la revendication 1,
**caractérisé en ce que**
les moyens de commande (7) et le régulateur de fréquence (3) sont réalisés pour que le second signal de commande © règle la fréquence nominale du régulateur de fréquence (3).

3. Circuit selon la revendication 1 ou 2,
**caractérisé en ce que**
les moyens de commande (7) sont réalisés pour qu'en décelant un abaissement de la fréquence d'entrée (HSYNC) par l'exploitation du signal de mesure de fréquence (A), il demande au générateur de tension (2) par l'intermédiaire du premier signal de commande (G), de réduire la tension d'alimentation (Ubvar) pour l'unité de déflection du signal d'image (1).

4. Circuit selon la revendication 3,
**caractérisé en ce que**
les moyens de commande (7) sont réalisés pour qu'après avoir indiqué au générateur de tension (2), par le premier signal de commande (G) qu'il doit réduire la tension d'alimentation (Ubvar), en détectant une diminution effective de la tension d'alimentation (Ubvar) par l'exploitation du signal de mesure de tension (B), générer le second signal de commande (C) appliqué au régulateur de fréquence (3) en fonction de la valeur instantanée de la tension d'alimentation (Ubvar) indiquée par le signal de mesure de tension (B).

5. Circuit selon la revendication 2 et la revendication 4,
**caractérisé en ce que**
les moyens de commande (7) sont conçus pour qu'après avoir indiqué au générateur de tension (2), par le premier signal de commande (G), de réduire la tension d'alimentation (Ubvar), en reconnaissant une diminution effective de la tension d'alimentation (Ubvar) par l'exploitation du signal de mesure de tension (B), il règle le second signal de commande (C) appliqué au régulateur de fréquence (3) pour réduire la fréquence nominale du régulateur de fréquence (3) en fonction de la valeur instantanée de la tension d'alimentation (Ubvar) fournie par le signal de mesure de tension (B).

6. Circuit selon l'une des revendications précédentes,
**caractérisé en ce que**
les moyens de commande (7) sont conçus pour qu'en détectant une augmentation de la fréquence d'entrée (HSYNC) par l'exploitation du signal de mesure de fréquence (A), le régulateur de fréquence (3) soit informé par le second signal de commande (C), d'avoir à augmenter la fréquence de fonctionnement (D) pour l'unité déflectrice de signal d'image (1).

7. Circuit selon la revendication 6,
**caractérisé en ce que**
les moyens de commande (7) sont réalisés pour qu'après avoir indiqué au régulateur de fréquence (3) par le second signal de commande (C), d'avoir augmenté la fréquence de fonctionnement (D) pour l'unité de déflection de signal d'image (1), le générateur de tension (2) sera seulement informé par le premier signal de commande (G) d'avoir à augmenter la tension d'alimentation (Ubvar) pour le déflecteur de signal d'image (1), que si la fréquence de fonctionnement (D) générée par le circuit de régulation de fréquence (3), pour l'unité de déflection de signal d'image (1), a atteint une valeur correspondant à la valeur augmentée de la fréquence d'entrée (HSYNC).

8. Circuit selon l'une des revendications précédentes,
**caractérisé en ce que**
l'installation de mesure de fréquence (6) est réalisée de manière numérique de façon à fournir au moyen de commandes (7) comme signal de mesure de fréquence (A), un mot de données correspondant à la valeur instantanée de la fréquence d'entrée (HSYNC).

9. Circuit selon la revendication 8,
**caractérisé en ce que**
l'installation de mesure de fréquence (6) comprend un compteur (10) pour générer le mot de données correspondant à la valeur instantanée de fréquence d'entrée (HSYNC),
le compteur (10) ayant une entrée d'horloge pour recevoir un signal d'horloge Fcount, une entrée de remise à l'état initial (R) pour recevoir la fréquence d'entrée (HSYNC) et une sortie de données (Q) pour émettre le mot de données.

10. Circuit selon l'une des revendications précédentes,
**caractérisé en ce que**
les moyens de commande (7) sont réalisés sous forme numérique et comprennent un premier comparateur (12), un second comparateur (13), un compteur (14) et un flip flop (15),
et une entrée de données (D) du flip flop (15) reçoit le signal de mesure de fréquence A de l'installation de mesure de fréquence (6) et une sortie de données (Q) du flip flop (15) fournit un mot de données correspondant au premier signal de commande (G),
le premier comparateur (12) comparant la valeur instantanée du signal de mesure de fréquence (A), à l'état de comptage instantané du compteur (14) et en fonction du résultat de la comparaison, il demande au compteur (14) d'augmenter ou de diminuer son état de comptage et permet le passage de la valeur instantanée du signal de mesure de fréquence (A) appliqué à l'entrée de données (D) du flip flop (15) vers la sortie de données (Q) de ce flip flop (15),
le second comparateur (13) comparant la valeur instantanée du signal de mesure de tension (B) de l'installation de mesure de tension (8) à l'état de comptage instantané du compteur (14) et en fonction de ce résultat de comparaison, il demande au compteur (14) de diminuer son état de comptage et,
l'état du compteur (14) est fourni comme mot de données correspondant au second signal de commande (C).

11. Circuit selon revendication 10,
**caractérisé en ce que**
le premier comparateur (12) présente une première sortie de commande, une seconde sortie de commande, une troisième sortie de commande, la première sortie de commande correspondant à un premier résultat de comparaison selon lequel la valeur instantanée du signal de mesure de fréquence (A) est inférieure à l'état de comptage instantané du compteur (14),
la seconde sortie de commande fournissant un second résultat de comparaison selon lequel la valeur instantanée du signal de mesure de fréquence (A) correspond à l'état de comptage instantané du compteur (14) et,
la troisième sortie de commande correspondant à un troisième résultat de comparaison selon lequel la valeur instantanée du signal de mesure de fréquence (A) est supérieure à l'état de comptage instantané du compteur (14),
le second comparateur (13) ayant une sortie de commande associée à un résultat de comparaison selon lequel la valeur instantanée du signal de mesure de tension (B) est inférieure à l'état de comptage instantané du compteur (14),
la première et la seconde sortie de commande du premier comparateur (12) étant reliées par une porte (OU 16) à un branchement de libération (EN) du flip flop (15) alors que la troisième sortie de commande du premier comparateur (12) est reliée à une première entrée de commande (Cnt-up) du compteur (14), la première entrée de commande (Cnt-up) du compteur (14) correspondant au fonctionnement du compteur (14) comme compteur et la première sortie de commande du premier comparateur (12) et la sortie de commande du second comparateur (13) sont reliées par une porte (ET 17) à une seconde entrée de commande (Cnt-dn) du compteur (14),
la seconde entrée de commande (Cnt-dn) du compteur (14) étant associée au mode de décomptage du compteur (14).

12. Application d'un circuit selon l'une des revendications précédentes pour commander la tension d'alimentation de l'unité de déflection horizontale (1), d'un système d'affichage d'image notamment d'un moniteur ou d'un téléviseur,
la fréquence d'entrée HSYNC du circuit étant la fréquence horizontale pour le fonctionnement de l'unité de déflection horizontale (1).
